# EUROPEAN PATENT APPLICATION

(11) **EP 3 741 595 A1**
(43) Date of publication of application: **25.11.2020**
(21) Application number: 19761422.5
(22) Date of filing: 26.02.2019
(51) Int. Cl.: B60H 1/22, A47C 7/74, B60H 1/00, B60N 2/56

(54) **PASSENGER COMPARTMENT STRUCTURE**

(30) Priority: 28.02.2018 JP 2018034350
(71) Applicant: MAZDA MOTOR CORPORATION, Hiroshima 730-8670 (JP)
(72) Inventor: YOKOTA, Kazuya, Aki-gun, Hiroshima 730-8670 (JP); OCHIAI, Hiroya, Aki-gun, Hiroshima 730-8670 (JP); OHSUMI, Toshihiko, Aki-gun, Hiroshima 730-8670 (JP); KANEISHI, Junji, Aki-gun, Hiroshima 730-8670 (JP); YOSHIZUE, Tomohiro, Aki-gun, Hiroshima 730-8670 (JP); KASHIMA, Toshihiro, Aki-gun, Hiroshima 730-8670 (JP)
(74) Representative: Behr, Wolfgang
(86) International application number: PCT/JP2019/007180
(87) International publication number: WO 2019/167910

(57) **Abstract**

There is provided a passenger compartment structure that can save power while ensuring thermal comfort of an occupant. The passenger compartment structure allows control of thermal comfort of the occupant in a posture seated on a seat. The passenger compartment structure includes a layered structure constituting at least part of an interior member disposed at a position where the interior member is able to face a lower leg of the occupant. The layered structure disposed in each of a front middle portion 2c, a front lower portion 2g, a frontal lower portion 4f, and a right surface front upper portion 6b having a high geometric factor for the lower leg includes a surface layer 14, a structural parent layer 11, and a temperature control mechanism layer 13 interposed between the surface layer 14 and the structural parent layer 11.

## Description

### Technical Field

The present invention relates to a passenger compartment structure, and particularly to a passenger compartment structure that enables control of thermal comfort of an occupant in a seated posture.

### Background Art

Conventionally, from the viewpoint of keeping one's head cool and one's feet warm, a vehicle air conditioning device is provided with a foot air outlet that can supply warm air to the feet of an occupant to raise the ambient temperature around legs of the occupant.

Since the space occupied by the occupant is narrow and the posture is restricted, and heat insulation from the external environment is low in an environment inside the passenger compartment, in order to secure thermal comfort of the occupant, a lot of energy consumption is required.

Here, the thermal comfort is defined in the American Society of Heating, Refrigerating and Air-Conditioning Engineers (ASHRAE) as "that state of mind which express satisfaction with the thermal environment", and is expressed using the psychological state and feeling of the occupant as an index.

Generally, a vehicle air conditioning device employs (thermal) transmission heating (also called convection heating) that warms an occupant via air flow (convection) inside the passenger compartment by blowing warm air (air-conditioned wind) whose temperature is adjusted to a predetermined target temperature from an air outlet so as to perform air conditioning in the entire passenger compartment.

Since transmission heating needs an amount of heat transmitted to a wall surface inside the passenger compartment (wall surface heat transmission amount) and the ventilation load for raising the temperature of the ventilation air, there is a risk that the air conditioning power consumption may increase.

Therefore, a technology for inhibiting the air conditioning power consumption has been proposed.

The vehicle air conditioning device of Patent Literature 1 includes a plurality of air outlets disposed for each seat for blowing out an air-conditioned wind toward local parts such as the head, upper half and lower half of the body, and feet of an occupant in a seated posture and is configured to control the temperature of the entire passenger compartment with the blown out air-conditioned wind.

The vehicle air conditioning device of Patent Literature 1 is designed to save power while ensuring thermal comfort of the occupant by performing zone air conditioning that blows out the air-conditioned wind around the occupant.

However, the technology of Patent Literature 1 is still transmission heating, and there is room for improvement from the viewpoint of power saving because power consumption occurs due to the wall surface heat transmission amount and ventilation load.

In particular, in electric vehicles and hybrid vehicles, which have been increasing in recent years, there is a risk that an increase in power consumption for air conditioning may cause a decrease in a cruising range because waste heat from an engine, which is a heat source, cannot be expected.

Therefore, it is considered to employ (thermal) radiant heating, which warms an occupant's body with radiant heat (radiation heat) via electromagnetic waves. The radiant heating makes it possible to inhibit the wall surface heat transmission amount escaping to the external environment via the wall surface inside the passenger compartment and the ventilation load for raising the temperature of the ventilation air more than the transmission heating.

However, if a large amount of temperature control units such as heater panels are disposed on the wall surface inside the passenger compartment, there is a concern that production costs will increase as the number of parts of the vehicle increases. In addition, there is also a risk that power consumption for operating the large number of heater panels increases and expected power saving cannot be secured.

### Citation List

### Patent Literature

Patent Literature 1: Japanese Patent Application Laid-Open No. 2006-131106

### Summary of Invention

An object of the present invention is to provide a passenger compartment structure that allows power saving while ensuring thermal comfort of the occupant.

A passenger compartment structure according to the present invention allows control of thermal comfort of an occupant in a posture of being seated on a seat. The passenger compartment structure includes a layered structure constituting at least part of an interior member disposed at a position where the interior member is able to face a lower leg of the occupant. The layered structure includes a surface layer, a structural parent layer, and a temperature control mechanism layer interposed between the surface layer and the structural parent layer to heat and/or cool the occupant.

### Brief Description of Drawings

FIG. 1 is a schematic perspective view of a passenger compartment structure including a temperature control device according to an embodiment of the present invention.
FIG. 2 is a block diagram of the temperature control device.
FIG. 3 is an explanatory diagram of a human body division model.
FIG. 4 is an explanatory diagram of an air division model.
FIG. 5 is an explanatory diagram of an interior division model.
FIG. 6 is a graph showing a first analysis result by simulation.
FIG. 7 is a graph showing a verification experiment result of a required temperature difference related to each part of an occupant.
FIG. 8 is a graph showing a second analysis result by simulation.
FIG. 9 is a comparison graph of radiant heating and transmission heating related to exergy loss for each part.
FIG. 10 is a comparison graph of radiant heating and transmission heating related to power consumption.
FIG. 11 is an explanatory diagram of region division of a floor panel in geometric factor calculation.
FIG. 12 is an explanatory diagram of region division of an instrument panel in geometric factor calculation.
FIG. 13 is an explanatory diagram of region division of a side panel of a door in geometric factor calculation.
FIG. 14 is an explanatory diagram of right region division of a center console in geometric factor calculation.
FIG. 15 is an explanatory diagram of left region division of the center console in geometric factor calculation.
FIG. 16 is a table showing a calculation result of geometric factors related to a lower leg of the occupant.
FIG. 17 is an explanatory diagram of a temperature control mechanism.
FIG. 18 is a graph showing a relationship between a thickness of a surface layer and a temperature rising speed.
FIG. 19 is an explanatory diagram of a heat insulating mechanism.
FIG. 20 is a flowchart showing a temperature control processing procedure.

### Description of Embodiment

An embodiment of the present invention will be described in detail below with reference to the drawings.

The following description exemplifies the present invention applied to a passenger compartment structure of a vehicle including an indoor temperature control device, and does not limit the present invention, applications thereof, or uses thereof.

In the drawings, descriptions are given assuming that an arrow F direction is a frontward direction of the vehicle, an arrow L direction is a leftward direction, and an arrow U direction is an upward direction.

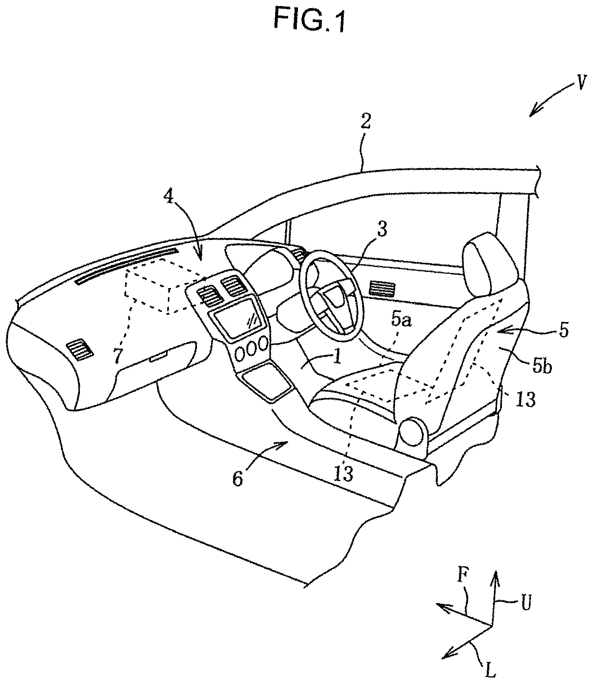

The embodiment of the present invention will be described below with reference to FIGS. 1 to 20. Note that FIG. 1 is an enlarged view of a portion around a driver's seat in a front right half of the passenger compartment in order to show main parts of the passenger compartment structure.

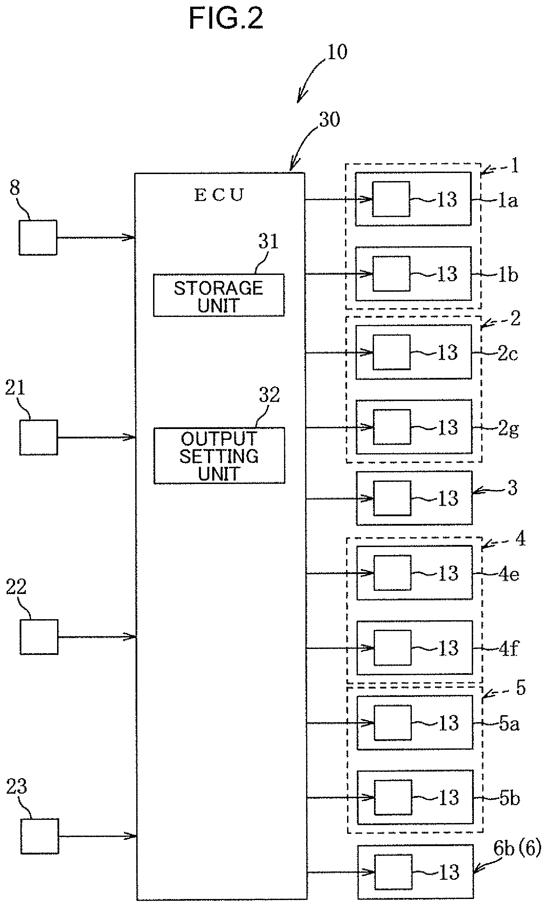

As shown in FIGS. 1 and 2, a vehicle V according to the present embodiment includes: a floor panel 1 constituting a passenger compartment floor; a pair of left and right doors 2; a steering wheel (hereinafter abbreviated as steering) 3 that can be steered by an occupant; an instrument panel 4; a pair of left and right seats 5, which are seats on which occupants can be seated, each including a seat cushion 5a and a seat back 5b; a center console 6 having a substantially rectangular solid shape and disposed to extend in a front-rear direction between the left and right front seats; an air conditioning device 7 that can blow out air-conditioned wind with the temperature adjusted to a target temperature into the passenger compartment; a vehicle power supply 8 that can be charged and discharged; a temperature control device 10; and the like.

A side panel is installed as an interior member inside each door 2 in a vehicle width direction. A covering material that covers a surface of the steering 3 is installed as an interior member.

Air outlets for the air conditioning device 7 are formed on left and right upper portions of the instrument panel 4 and a central upper portion in the vehicle width direction. A glove box is formed in a left middle portion of the instrument panel 4. A meter panel is formed at a frontal position of the instrument panel 4 facing the occupant.

A covering material that covers a surface of the center console 6 is installed as an interior member.

Unless otherwise described, for convenience of description, the following description will be made assuming that the seat 5 refers to a right seat on which the occupant who is the driver is seated, and the floor panel 1 refers to a front right region of the floor panel where the seat 5 on which the occupant who is the driver is seated is disposed and includes a floor mat, which is an interior member laid on an upper surface. In addition, all the members include a covering material that covers a surface of the member as an interior member inside the passenger compartment.

To begin with, a concept of the present invention will be described.

This passenger compartment structure is configured to perform temperature control on parts on a body that have a great influence on thermal comfort of the occupant seated on the seat 5.

The part on the body that has a great influence on thermal comfort is a part where biological homeostasis is likely to be impaired, that is, a difference between the so-called deep temperature and the body surface temperature is likely to increase, which can be determined by the human body exergy loss. Exergy is the maximum amount of work that can theoretically be taken out of the system when a state changes until equilibrium is achieved with the outside world. In other words, exergy is a concept representing waste heat of energy.

The human body exergy loss can be defined as including the sum of four elements: core loss, skin loss, clothed heat conduction loss, and clothed radiation loss.

Therefore, the present inventors have created an exergy loss analysis model in order to identify parts on the body that have great influence on thermal comfort of the occupant seated on the seat 5.

The exergy loss analysis model includes four models: human body division model M1, air division model M2, interior division model M3, and radiation model.

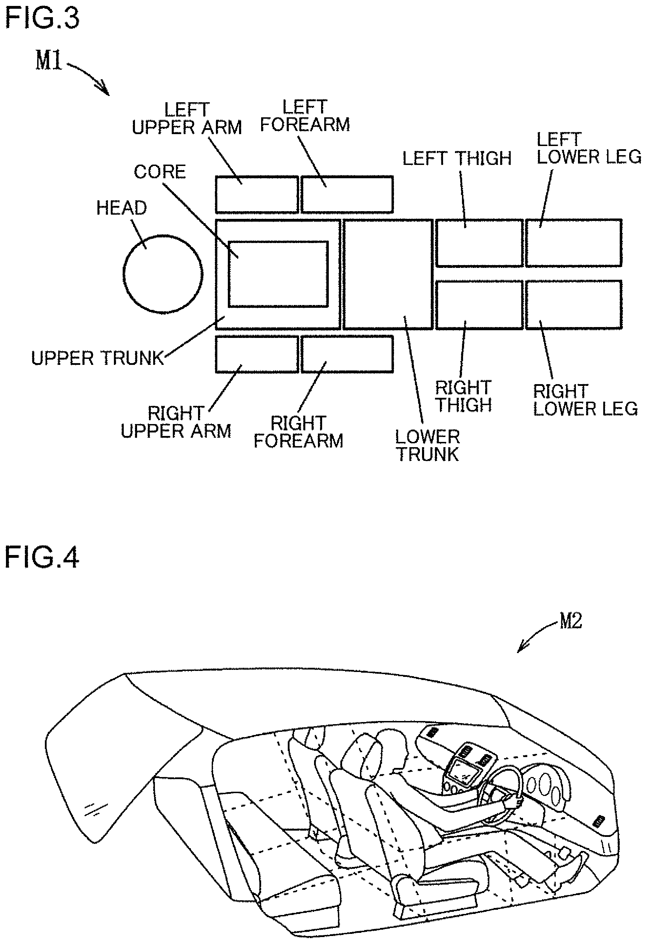

As shown in FIG. 3, the human body division model M1 simulating a human body shape is divided into 11 parts: a head, upper trunk, left upper arm, left forearm, right upper arm, right forearm, lower trunk, left thigh, left lower leg, right thigh, and right lower leg. Each part is assigned with a corresponding surface area and weight. Each part is configured such that a core layer, a skin layer, a clothed heat conduction layer, and a clothed radiation layer are incorporated in the each part, and heat transport is performed between layers by movement of blood flow, heat conduction, and heat radiation.

As described above, for each part of the human body division model M1, the exergy loss of the above four elements is calculated by using the thermal equilibrium equation to determine the thermal sensation of the occupant.

As shown in FIG. 4, in the air division model M2, the three-dimensional computational fluid dynamics (CFD) model calculated based on the three-dimensional computer aided design (CAD) data of the passenger compartment degenerates, specifically, the space inside the passenger compartment of the vehicle V is divided into 28 regions.

As described above, the flow of the indoor airflow (flow velocity), the airflow temperature distribution, and the like are calculated, for example, by using numerical analysis of the Navier-Stokes equations by the finite element method, the finite volume method, the difference method, or the like.

Since the input exergy is the radiant heat from the wall surface inside the passenger compartment and the output exergy is the radiant heat from clothes, the clothed radiation loss needs to consider the panel temperature of the interior member.

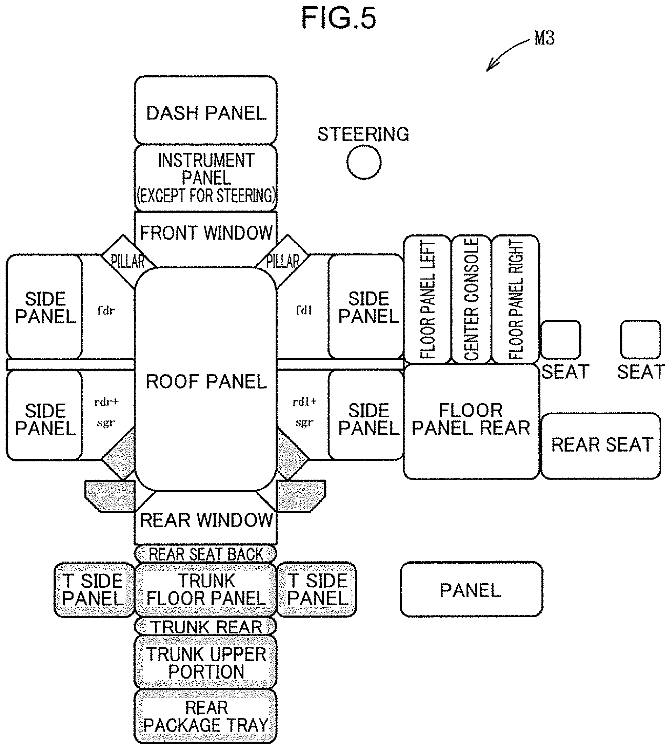

Therefore, as shown in FIG. 5, the interior division model M3 divides the interior member constituting the wall surface inside the passenger compartment into 25 regions (non-shaded parts).

The interior division model M3 does not consider the panel temperature of a rear pillar, a rear seat back, and the like, which are shaded parts in order to determine the influence of the radiant heat on the occupant.

As described above, the panel temperatures of the instrument panel 4, the center console 6, and the like are calculated.

Since the clothed radiation loss has a mutual radiation relationship between two, the amount of radiant heat associated with each part of the occupant is calculated using the geometric factor.

The geometric factor is an index showing the geometric positional relationship between two heat transfer surfaces, in other words, the ratio of the energy released from one surface to the energy reaching the other surface. Actually, since it is difficult to mathematically determine the geometric factor from the geometric relationship, in the present embodiment, calculation is performed using an area proportion (%) or area ratio of each heat transfer surface in a 180-degree fisheye lens image.

As described above, the amount of radiant heat related to each part of the occupant is calculated.

Based on the above description, the present inventors have conducted a heating analysis on the exergy loss by linking the human body division model M1 with the air division model M2, the interior division model M3, and the radiation model.

Since the exergy loss of each part of the occupant is averaged in about 5 minutes from the start of heating, a first analysis has been performed to simulate the exergy loss of each part based on the exergy loss 5 minutes after the start of heating.

Furthermore, in order to verify validity of the exergy loss analysis model, a verification experiment has been performed to determine the required temperature difference of each part by the actual occupant.

Note that the analysis condition is that the outside air temperature is -18°C, the vehicle speed is 50 km/h, and the temperature of the air conditioned wind increases with the passage of time.

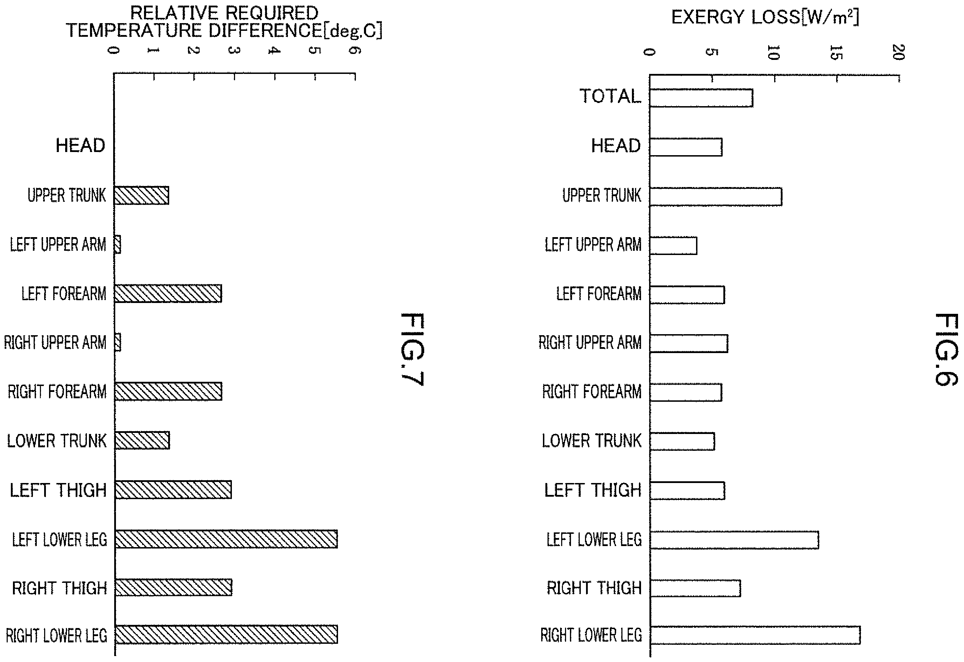

FIG. 6 shows a result of the first analysis by simulation, and FIG. 7 shows a result of the verification experiment.

As shown in FIGS. 6 and 7, since the analysis result by simulation and the experimental result show the same tendency in each part of the occupant, it has been confirmed that application of the exergy loss analysis model to heating analysis is appropriate.

Moreover, as shown in FIG. 6, it has been found that in the early stage of heating, more heat input is required in the lower half than the upper half of the body, in particular, in the left and right lower legs of the occupant.

Also, under uniform conditions, by simulation using the human body division model M1, a second analysis has been performed to calculate the human body exergy loss when the wall surface inside the passenger compartment is at a low temperature (14°C) and high temperature (24°C). The analysis conditions are that the external environment temperature is 5°C, emissivity is constant (ε = 0.95), and the transmission heating (warm air) temperature is constant.

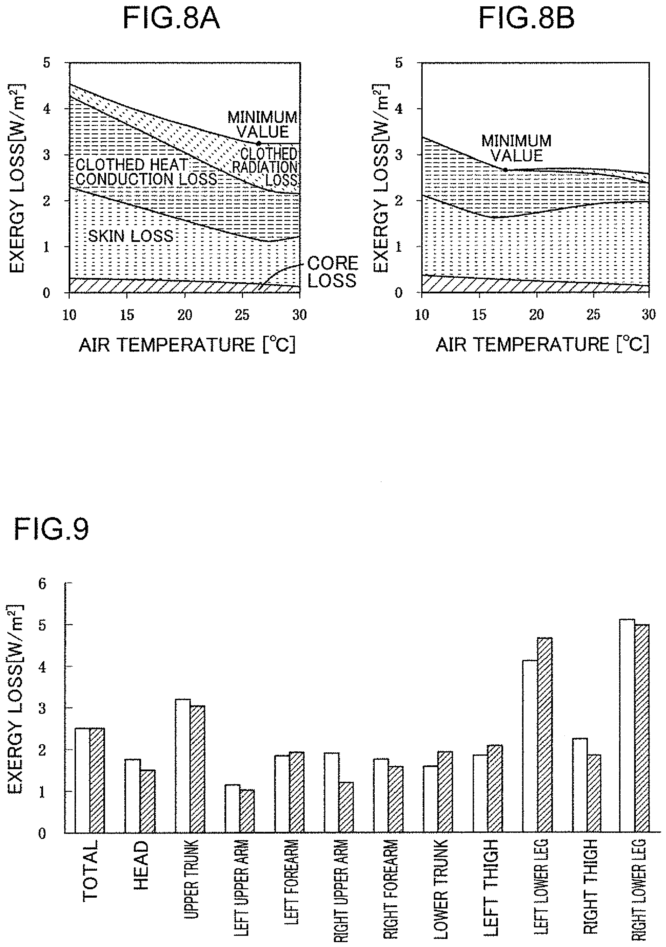

FIG. 8A shows the analysis result of the low temperature wall, and FIG. 8B shows the analysis result of the high temperature wall.

As shown in FIGS. 8A and 8B, it has been confirmed that the minimum value of the exergy loss on the low temperature wall (3.3) is higher than the minimum value of the exergy loss on the high temperature wall (2.6), and that the time until the exergy loss on the low temperature wall reaches the minimum value is longer than the time until the exergy loss on the high temperature wall reaches the minimum value.

By the first and second analysis, it has been found that more heat input is required in the left and right lower legs of the occupant in the early stage of heating, and that radiant heat from the wall inside the passenger compartment is effective for improving the thermal sensation of the occupant.

That is, it is found that, in order to improve thermal comfort of the occupant, lower leg radiant heating that raises the temperature of the interior member around the lower legs of the occupant is most effective than transmission heating (convection heating).

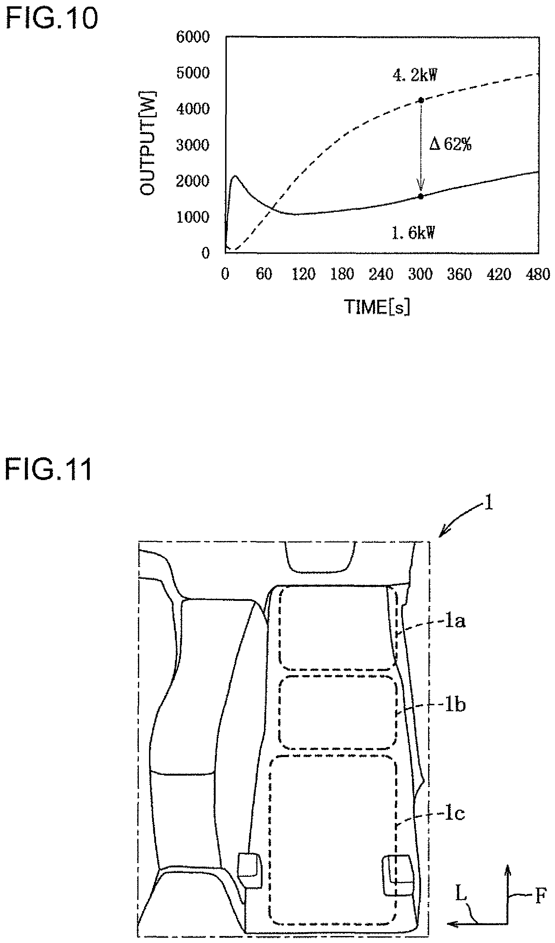

Under the same analysis condition as in the first analysis, when transmission heating is activated such that the total exergy loss, which is an average value of each part, has the same value, as shown in FIG. 9, although the heating effects of radiant heating (solid line) and transmission heating (dashed line) are equivalent in total, as shown in FIG. 10, regarding the power consumption 5 minutes after the start of temperature control, the power consumption (1.6kW) of radiant heating (solid line) is about 62% lower than the power consumption (4.2kW) of transmission heating (broken line).

Next, the wall portion inside the passenger compartment is determined where the amount of radiant heat is large on the part of the body that has a great influence on thermal comfort of the occupant seated on the seat 5, that is, so-called lower legs.

Therefore, out of the interior division model M3 positioned around the left and right lower legs of the seated occupant, the wall portion constituting each of the floor panel 1, the instrument panel 4, the side panel of the front right door 2, and the center console 6 is divided into a plurality of regions, and the geometric factors for the left and right lower legs are calculated for each of the divided wall surfaces that have undergone the division into regions.

Here, the region division of each interior member will be described.

As shown in FIG. 11, the floor panel 1 is divided into a front portion 1a corresponding to a front inclined portion, a middle portion 1b corresponding to a lower portion of the occupant's calf rearward of the front portion 1a, and a rear portion 1c corresponding to a portion hidden by the seat 5 rearward of the middle portion 1b.

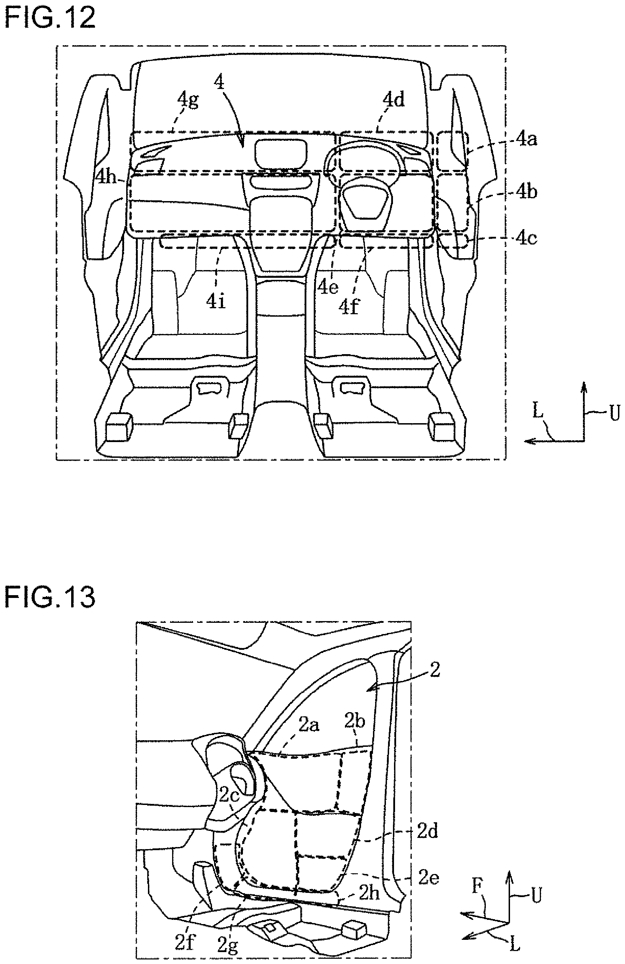

As shown in FIG. 12, the instrument panel 4 is divided into an upper right portion 4a constituting an upper surface and corresponding to a periphery of a right air outlet, a right middle portion 4b corresponding to a lower portion of the upper right portion 4a, a lower right portion 4c corresponding to a portion facing the floor panel 1 on the lower side of the right middle portion 4b, a frontal upper portion 4d corresponding to a meter panel portion on the frontal portion of the occupant, a frontal middle portion 4e corresponding to a peripheral portion of the steering column below the frontal upper portion 4d, a frontal lower portion 4f corresponding to a portion facing the floor panel 1 under the frontal middle portion 4e, an upper left portion 4g constituting the upper surface and corresponding to a portion from the dashboard to the meter panel, a left middle portion 4h corresponding to a portion from the glove box to a peripheral portion of device operation buttons below the upper left portion 4g, and a lower left portion 4i corresponding to a portion facing the floor panel 1 under the left middle portion 4h.

As shown in FIG. 13, the side panel of the front right door 2 is divided into a front upper portion 2a constituting a front opening edge portion of the door 2, a rear upper portion 2b corresponding to a portion near a shoulder of the occupant and rearward of the front upper portion 2a, a front middle portion 2c corresponding to a periphery of a speaker below the front upper portion 2a, a rear middle portion 2d corresponding to a portion near a flank of the occupant and rearward of the front middle portion 2c, a rear middle portion 2e corresponding to a lower portion of the rear middle portion 2d and rearward of the front middle portion 2c, a front end lower portion 2f corresponding to a lower end of the door 2 and frontward of the front middle portion 2c, a front lower portion 2g corresponding to the lower end of the door 2 and rearward of the front end lower portion 2f, and a rear lower portion 2h corresponding to the lower end of the door 2 and rearward of the front lower portion 2g.

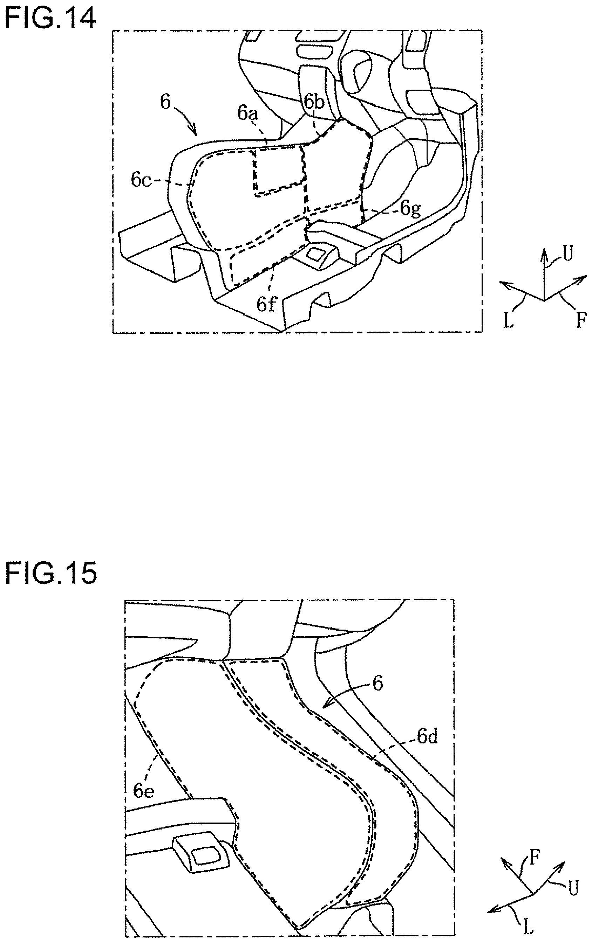

As shown in FIGS. 14 and 15, the center console 6 is divided into a right surface central upper portion 6a corresponding to a central portion in the front-rear direction of a right wall surface upper portion of the center console 6, a right surface front upper portion 6b corresponding to a portion near the left lower leg and frontward of the right surface central upper portion 6a (front end position of the seat 5), a right surface rear middle portion 6c corresponding to a portion hidden by the seat 5, an upper surface portion 6d corresponding to an upper surface of the center console 6, a left surface portion 6e corresponding to a left wall surface of the center console 6, a right surface rear lower portion 6f corresponding to a lower portion of the right surface rear middle portion 6c, and a right surface front lower portion 6g corresponding to a lower portion of the right surface front upper portion 6b and frontward of the right surface rear lower portion 6f.

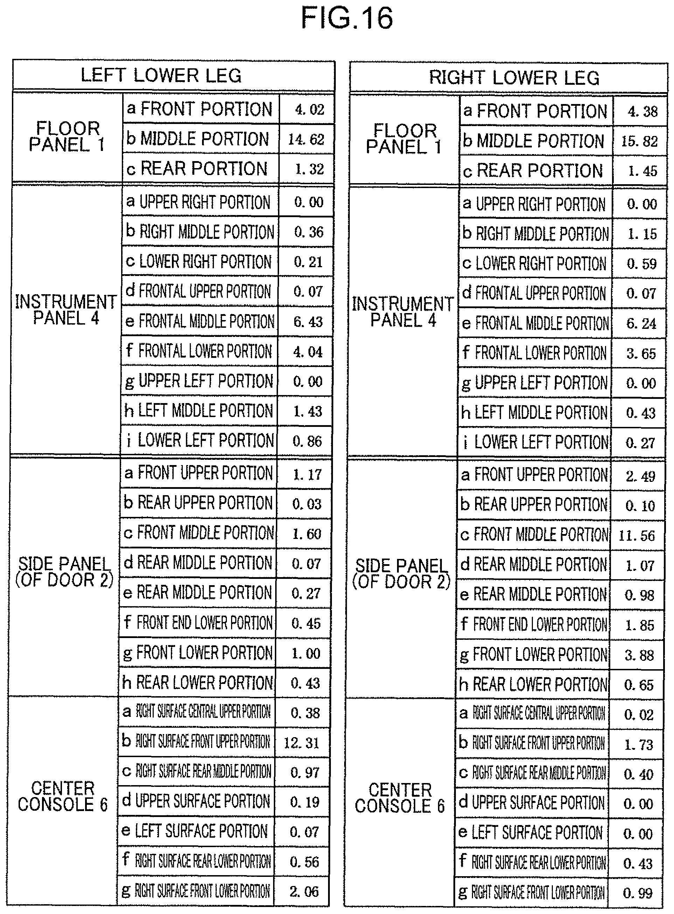

The table in FIG. 16 shows the geometric factor (%) of the left and right lower legs for each divided wall surface.

As shown in FIG. 16, in the floor panel 1, both middle portions 1b are 10% or more, both front portions 1a are 3% or more, and both rear portions 1c are 1% or more.

In the instrument panel 4, both frontal middle portions 4e and frontal lower portions 4f are 3% or more, one of the right middle portions 4b and the left middle portions 4h are 1% or more, and others are all less than 1%.

In the side panel of the front right door 2, one (right lower leg) of the front upper portions 2a, front middle portions 2c, and front lower portions 2g are 2% or more, one (right lower leg) of the rear middle portions 2d and the front end lower portions 2f are 1% or more, and others are all less than 1%.

In the center console 6, one (left lower leg) of the right surface front upper portions 6b is 10% or more, one (left lower leg) of the right surface front lower portions 6g is 1% or more, others are all less than 1%.

Based on the above description, a first region is selected from a region below a seat surface of the seat 5 (region corresponding to the lower half of the body) where at least one lower leg of the left and right lower legs has a geometric factor of 2% or more. A second region with high cooling efficiency for the occupant is selected from a region above the seat surface of the seat 5 (region corresponding to the upper half of the body). A third region is selected from a region below the seat surface of the seat 5 where at least one lower leg of the left and right lower legs has a geometric factor of 1% or more.

In the present embodiment, the front portion 1a and the middle portion 1b of the floor panel 1, the front middle portion 2c and the front lower portion 2g of the side panel of the door 2, the frontal lower portion 4f of the instrument panel 4, the seat cushion 5a, and the right surface front upper portion 6b of the center console 6 are defined as the first region. From the viewpoint of keeping one's head cool and one's feet warm, the steering 3, the frontal middle portion 4e of the instrument panel 4, and the seat back 5b are defined as the second region. The front end lower portion 2f of the side panel of the door 2, the right middle portion 4b and the left middle portion 4h of the instrument panel 4, and the right surface front lower portion 6g of the center console 6 are defined as the third region.

Note that for convenience of description, hereinafter, the same reference symbols as those used for the interior division model M3 are used to describe each wall surface portion, which is an interior member.

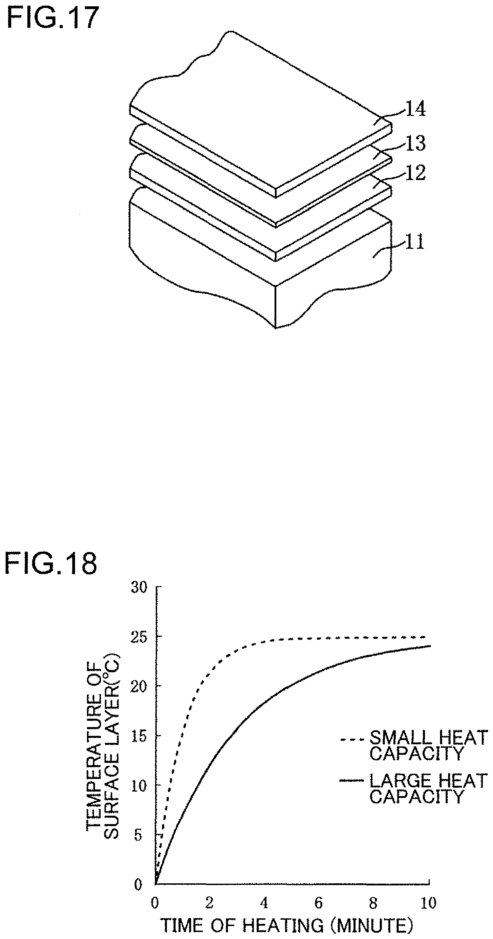

As shown in FIG. 17, a temperature control mechanism formed in the first and second regions of the interior member is formed as a layered structure including a structural parent layer 11, a heat insulator layer 12 disposed on a surface of the structural parent layer 11, a temperature control mechanism layer 13 disposed on a surface of the heat insulator layer 12, and a surface layer 14 disposed on a surface of the temperature control mechanism layer 13.

The structural parent layer 11 includes, for example, a synthetic resin material. The heat insulator layer 12 includes, for example, a fiber heat insulating material, a foam plastic heat insulating material, or an aerogel heat insulating material. The temperature control mechanism layer 13 is configured to control heating and/or cooling of the occupant, and includes, for example, a Peltier element that can radiate heat when a current is passed in one direction and absorb heat when a current is passed in the other direction.

Note that the temperature control mechanism layer 13 may include a combined mechanism of a panel heater and a cooling water pipe instead of the Peltier element.

The surface layer 14 is configured to have a small heat capacity in order to inhibit the operation power consumption by the temperature control mechanism layer 13.

As shown in FIG. 18, for the same material, a thicker surface layer (solid line) has a lower temperature rising speed than a thinner surface layer (broken line). That is, the thicker surface layer needs larger power for raising the temperature of the surface layer itself than the thinner surface layer.

In the present embodiment, in order to inhibit the self temperature raising power, the thickness of the surface layer 14 is set at 1.5 mm or less such that the temperature rising speed of the surface layer 14 is higher than 8°C/min, and in order to ensure the reliability related to the strength of the interior member, the thickness of the surface layer 14 is set at 0.5 mm or more.

Although the geometric factor for the lower leg is smaller in the third region than in the first region, there is a concern about exergy loss of the occupant due to surrounding wall temperature radiation. Therefore, the heat exchange between the inside of the passenger compartment and the external environment is blocked by the heat insulator layer 12, thereby inhibiting the exergy loss of the occupant.

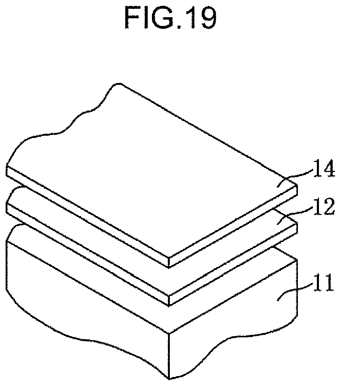

As shown in FIG. 19, a heat insulating mechanism formed in the third region of the interior member is formed as a layered structure including the structural parent layer 11, the heat insulator layer 12 disposed on a surface of the structural parent layer 11, and the surface layer 14 disposed on a surface of the heat insulator layer 12. The structural parent layer 11, the heat insulator layer 12, and the surface layer 14 have the same configuration as the temperature control mechanism, and thus detailed description thereof will be omitted.

The third region is a region where the thermal influence on the lower leg of the occupant is the highest after the first region during heating.

Next, the temperature control device 10 will be described.

The temperature control device 10 performs control such that the temperature of the temperature control mechanism layer 13 in the first region that controls the temperature of the lower half of the occupant body seated on the seat 5 is higher than the temperature of the temperature control mechanism layer 13 in the second region that controls the temperature of the upper half of the occupant body.

As shown in FIG. 2, the temperature control device 10 includes a power supply 8, an ignition switch 21 that can detect an on/off operation of ignition, an air conditioning device switch 22 that can start the air conditioning device 7 and set a target temperature, a room temperature sensor 23 that can detect an indoor temperature of the vehicle V, an electronic control unit (ECU) 30, and the like.

The room temperature sensor 23 is disposed on a surface portion of the instrument panel 4 and is configured to output a detection signal to the ECU 30. Note that a plurality of room temperature sensors 23 may be set on each surface of the first and second regions, which are interior members.

The ECU 30 includes a central processing unit (CPU), a ROM, a RAM, an in-side interface, an out-side interface, and the like.

A program and data for various type of control are stored in the ROM. A processing region to be used when the CPU performs a series of processes is provided in the RAM

The ECU 30 is electrically connected to each of the temperature control mechanism layers 13 disposed on the floor panel 1 (front portion 1a, middle portion 1b), the side panel of the door 2 (front middle portion 2c, front lower portion 2g), the steering 3, the instrument panel 4 (frontal middle portion 4e, frontal lower portion 4f), the seat 5 (cushion 5a, back 5b), and the center console 6 (right surface front upper portion 6b).

The ECU 30 operates the temperature control mechanism layer 13 in the priority region of the first and second regions with priority over the temperature control mechanism layer 13 in the non-priority region of the first and second regions. The priority operation includes an output amount, operation start timing, operation time, and the like.

As shown in FIG. 2, the ECU 30 includes a storage unit 31, an output setting unit 32, and the like.

The storage unit 31 stores a target output map (not shown) in which a target output (power) is set for each interior member according to a difference between the target temperature and the detected indoor temperature. The target output map is set in advance by experiment or the like.

The output setting unit 32 sets one of the first and second regions as a priority region and the other as a non-priority region based on mode setting by the air conditioning device switch 22 (target temperature setting for heating or cooling).

Power is supplied to (the temperature control mechanism layer 13 of) the non-priority region based on the target output map. Power of 1.5 times or more of the power based on the target output map (power supplied to the non-priority region) is supplied to (the temperature control mechanism layer 13 of) the priority region.

Specifically, during heating, the output of the temperature control mechanism layer 13 in the first region is controlled at 1.5 times the output of the temperature control mechanism layer 13 in the second region. During cooling, the output of the temperature control mechanism layer 13 in the second region is controlled at 1.5 times the output of the temperature control mechanism layer 13 in the first region.

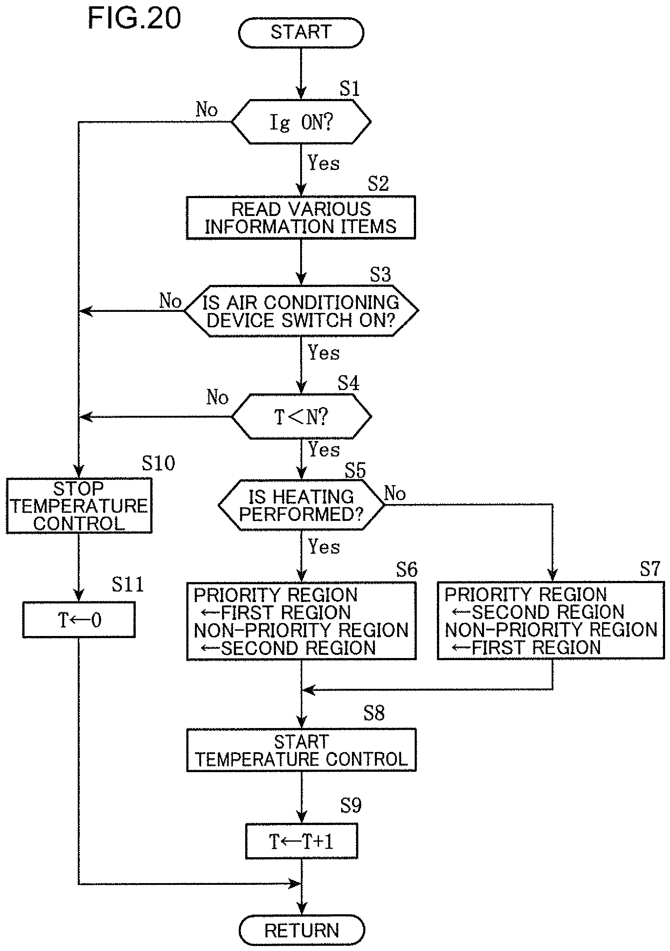

Next, a temperature control processing procedure will be described with reference to the flowchart of FIG. 20.

Note that Si (i = 1, 2, ...) shows steps for respective processes.

The temperature control by the temperature control device 10 is processed in parallel with the temperature control by the air conditioning device 7.

As shown in FIG. 20, the ECU 30 of the temperature control device 10 determines in S1 whether the ignition switch 21 is turned on.

As a result of the determination in S1, when the ignition switch 21 is turned on, since the occupant is seated on the seat 5, the ECU 30 proceeds to S2.

In S2, the ECU 30 reads information such as the detection signals from the air conditioning device switch 22 and the room temperature sensor 23 and the target output map, and proceeds to S3.

In S3, the ECU 30 determines whether the air conditioning device switch 22 is turned on.

As a result of the determination in S3, when the air conditioning device switch 22 is turned on, since there is a request for controlling the temperature inside the passenger compartment, the ECU 30 proceeds to S4.

In S4, the ECU 30 determines whether a timer T is less than a determination threshold N (for example, 300 sec).

From the viewpoint of exergy loss, since each part of the human body is approximately averaged in about 5 minutes, the temperature control device 10 is operated in addition to the operation of the air conditioning device 7 only in the initial stage of air conditioning.

As a result of the determination in S4, when the timer T is less than the determination threshold N, the ECU 30 proceeds to S5.

In S5, the ECU 30 determines whether the air conditioning device 7 is performing heating.

As a result of the determination in S5, when the air conditioning device 7 is performing heating, the ECU 30 sets the first region as the priority region, sets the second region as the non-priority region (S6), and proceeds to S8.

The setting in S6 is intended to cause the temperature control mechanism layer 13 disposed in the first region where the geometric factor for the lower leg of the occupant is high to operate preferentially over the temperature control mechanism layer 13 disposed in the second region.

As a result of the determination in S5, when the air conditioning device 7 is not performing heating, the ECU 30 sets the second region as the priority region, sets the first region as the non-priority region (S7), and proceeds to S8.

The setting in S7 is intended to cause the temperature control mechanism layer 13 disposed in the second region where contribution to cooling for the upper half of the occupant body is high to operate preferentially over the temperature control mechanism layer 13 disposed in the first region.

In S8, the ECU 30 supplies the power that is set for the temperature control mechanism layer 13 of each of the priority region and the non-priority region to start the temperature control of each region, and proceeds to S9.

The power based on the target output map is supplied to the temperature control mechanism layer 13 in the non-priority region. The power of 1.5 times the power supplied to the temperature control mechanism layer 13 in the non-priority region is supplied to the temperature control mechanism layer 13 in the priority region.

In S9, the ECU 30 adds 1 to the timer T and returns to the start.

As a result of the determination in S4, when the timer T is equal to or greater than the determination threshold N, the exergy loss of each part of the human body is approximately averaged, and thus the ECU 30 proceeds to S10.

As a result of the determination in S3, when the air conditioning device switch 22 is turned off, there is no request for controlling the temperature inside the passenger compartment, and thus the ECU 30 proceeds to S10.

As a result of the determination in S1, when the ignition switch 21 is turned off, the occupant is not in operation, and thus the ECU 30 proceeds to S10.

In S10, the ECU 30 stops power supply, stops temperature control in the first and second regions, and proceeds to S11.

In S11, the ECU 30 resets the timer T to 0 and returns to the start.

Next, functions and effects of the passenger compartment structure will be described.

With the passenger compartment structure according to the present embodiment, the temperature control mechanism layer 13 is disposed in the layered structure of each of the front middle portion 2c, the front lower portion 2g, the frontal lower portion 4f, and the right surface front upper portion 6b, which are at least part of the interior member facing the lower leg of the occupant. Therefore, the temperature control mechanism layer 13 in limited portions enables intensive temperature control of the lower leg having a great influence on thermal comfort of the occupant.

The layered structure of the front middle portion 2c, the front lower portion 2g, the frontal lower portion 4f, and the right surface front upper portion 6b includes the surface layer 14, the structural parent layer 11, and the temperature control mechanism layer 13 interposed between the surface layer 14 and the structural parent layer 11. Therefore, the energy loss of the temperature control mechanism layer 13 can be minimized, and the operation power consumption by the temperature control mechanism layer 13 can be inhibited.

Since the layered structure of the front middle portion 2c, the front lower portion 2g, the frontal lower portion 4f, and the right surface front upper portion 6b is disposed in portions close to the lower leg, the operation power consumption by the temperature control mechanism layer 13 can be further inhibited.

Since the layered structure is disposed in the frontal lower portion 4f below the instrument panel 4 and covering both feet of the occupant, it is possible to surely control the temperature of the lower leg of the occupant with the minimum temperature control mechanism layer 13.

The layered structure is disposed in at least one among the right surface front upper portion 6b, which is the side of the center console forward of the seat 5 front end, the sides of the side panels 2c and 2g frontward of the seat front end and below the seat surface, and the instrument panel frontal lower portion 4f positioned in front of the occupant. Therefore, it is possible to surely control the temperature of the lower leg of the occupant with the minimum temperature control mechanism layer 13.

The temperature control mechanism layer 13, which includes a panel heater that can radiate heat, can surely warm the lower leg of the occupant without giving influence to the layout inside the passenger compartment.

The temperature control mechanism layer 13, which includes a cooling water pipe that can cool the occupant, can surely cool the lower leg of the occupant.

Next, modifications obtained by partially changing the embodiment will be described.
1) The above-described embodiment has described an example in which the front portion 1a and the middle portion 1b, the front middle portion 2c and the front lower portion 2g, the frontal lower portion 4f, the seat cushion 5a, and the right surface front upper portion 6b of the center console 6 are the first region, and the front end lower portion 2f, the right middle portion 4b and the left middle portion 4h, and the right surface front lower portion 6g are the third region. However, the first region can be selected from a region where at least one of the left and right lower legs has a geometric factor of 2% or more, and the third region can be selected from a region where at least one of the left and right lower legs has a geometric factor of 1% or more.
   In addition, an example has been described in which the steering 3, the frontal middle portion 4e of the instrument panel 4, and the seat back 5b are defined as the second region. However, the second region is required at least to be a region having high cooling efficiency for the occupant, and may be the headrest or the front portion of the roof trim.
2) The above-described embodiment has described an example in which the temperature control mechanism layer includes a Peltier element or a combined mechanism of a panel heater and a cooling water pipe. However, the panel heater may be disposed in the first region effective for heating and the cooling water pipe may be disposed in the second region effective for cooling.
   Only the panel heater may be provided in the first region in order to be specialized in heating.
3) The above-described embodiment has described an example in which the occupant is a driver. However, the occupant may be seated on the passenger seat, and in this case, except for the steering, the modification has a configuration with specifications bilaterally symmetrical with respect to a case where the occupant is a driver.
4) In addition, those skilled in the art can implement a mode in which various modifications are added to the embodiment or a mode in which embodiments are combined without departing from the spirit of the present invention, and the present invention also includes such modifications.

### <Conclusion of embodiment>

The above embodiment is concluded as follows.

A passenger compartment structure according to the above-described embodiment allows control of thermal comfort of an occupant in a posture of being seated on a seat. The passenger compartment structure includes a layered structure constituting at least part of an interior member disposed at a position where the interior member is able to face a lower leg of the occupant. The layered structure includes a surface layer, a structural parent layer, and a temperature control mechanism layer interposed between the surface layer and the structural parent layer to heat and/or cool the occupant.

In this passenger compartment structure, since the temperature control mechanism layer is disposed in at least part of the interior member disposed at a position where the interior member is able to face the lower leg of the occupant, the temperature control mechanism layer in the limited portions enables intensive temperature control of the lower leg having a great influence on thermal comfort of the occupant.

The layered structure includes the surface layer, the structural parent layer, and the temperature control mechanism layer interposed between the surface layer and the structural parent layer. Therefore, the energy loss of the temperature control mechanism layer can be minimized, and the operation power consumption by the temperature control mechanism layer can be inhibited.

The layered structure is disposed in a portion close to the lower leg.

With this configuration, it is possible to further inhibit the operation power consumption by the temperature control mechanism layer.

The layered structure is disposed in a portion below an instrument panel and covering both feet of the occupant.

With this configuration, it is possible to surely control the temperature of the lower leg of the occupant with the minimum temperature control mechanism layer.

The layered structure is disposed in at least one among a side of a center console positioned forward of a front end of the seat, a side of a side panel positioned forward of the front end of the seat and below a seat surface of the seat, and a frontal lower portion of the instrument panel positioned at a front of the occupant.

With this configuration, it is possible to surely control the temperature of the lower leg of the occupant with the minimum temperature control mechanism layer.

The temperature control mechanism layer includes a panel heater configured to radiate heat.

With this configuration, it is possible to surely warm the lower leg of the occupant without giving influence to the layout inside the passenger compartment.

The temperature control mechanism layer includes a cooling member configured to cool the occupant.

With this configuration, it is possible to surely cool the lower leg of the occupant.

With the passenger compartment structure according to the embodiment, it is possible to save power while ensuring thermal comfort of the occupant.

## Claims

1. A passenger compartment structure allowing control of thermal comfort of an occupant in a posture of being seated on a seat, the passenger compartment structure comprising
a layered structure constituting at least part of an interior member disposed at a position where the interior member is able to face a lower leg of the occupant,
wherein the layered structure includes a surface layer, a structural parent layer, and a temperature control mechanism layer interposed between the surface layer and the structural parent layer to heat and/or cool the occupant.

2. The passenger compartment structure according to claim 1, wherein the layered structure is disposed in a portion close to the lower leg.

3. The passenger compartment structure according to claim 1 or 2, wherein the layered structure is disposed in a portion below an instrument panel and covering both feet of the occupant.

4. The passenger compartment structure according to any one of claims 1 to 3, wherein the layered structure is disposed in at least one among a side of a center console positioned forward of a front end of the seat, a side of a side panel positioned forward of the front end of the seat and below a seat surface of the seat, and a frontal lower portion of the instrument panel positioned at a front of the occupant.

5. The passenger compartment structure according to any one of claims 1 to 4, wherein the temperature control mechanism layer includes a panel heater configured to radiate heat.

6. The passenger compartment structure according to any one of claims 1 to 4, wherein the temperature control mechanism layer includes a cooling member configured to cool the occupant.
